Europäisches Patentamt

European Patent Office

Office européen des brevets

(19)

(11) Veröffentlichungsnummer: **0 032 899**
**B1**

(12) **EUROPÄISCHE PATENTSCHRIFT**

(45) Veröffentlichungstag der Patentschrift:
30.11.83

(51) Int. Cl.³: **G 06 F  15/20**, G 06 F  3/153,
G 03 F  3/08

(21) Anmeldenummer: 80900920.2

(22) Anmeldetag: 17.05.80

(86) Internationale Anmeldenummer:
PCT/DE 80/00069

(87) Internationale Veröffentlichungsnummer:
WO 80/02612  (27.11.80 Gazette 80/27)

(54) **VERFAHREN UND EINRICHTUNG ZUM ERMITTELN VON KONTUREN INNERHALB EINES DIGITAL GESPEICHERTEN BILDES.**

(30) Priorität: 18.05.79 DE 2920070

(43) Veröffentlichungstag der Anmeldung:
05.08.81 Patentblatt 81/31

(45) Bekanntmachung des Hinweises auf die Patenterteilung:
30.11.83 Patentblatt 83/48

(84) Benannte Vertragsstaaten:
FR GB NL

(56) Entgegenhaltungen:
DE - A - 2 137 676
DE - A - 2 437 250
DE - A - 2 607 623

Medical and Biological Engineering and Computing,
Band 16, Nr. 5, September 1978(Stevenage, GB),
Mancini et al. "Minimum Computer System for
Video-densitometry and Image Analysis", pages 542-548
Philips Technish Tljdschrift, Band 35, Nr. 6, 1975,
(Eindhoven, NL), Spiesberger et al. "Machinaal Meten
ann Röntgenopnamen", pages 179-189
Computer Graphics and Image Processing, Band 7, Nr.
3, June 1978 (New York, US), Ashkar et al. "The Contour
Extraction Problem with Biomedical Applications",
pages 331-355
Computer Graphics and Image Processing, Band 1, Nr.

(73) Patentinhaber: DR.-ING. RUDOLF HELL GmbH,
Grenzstrasse 1-5, D-2300 Kiel 14 (DE)

(72) Erfinder: PREUSS, Dieter, Seebrookswiese 21,
D-2300 Klausdorf (DE)
Erfinder: TAUDT, Heinz, Quinckestrasse 7, D-2300 Kiel
(DE)

(56) Entgegenhaltungen: (Fortsetzung)
1, 1972 (New York, US)Holdermann et al.
"Preprocessing of Gray-Scale Pictures", pages 66-80

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren und Einrichtung zum Ermitteln von Konturen innerhalb eines
digital gespeicherten Bildes

### Technisches Gebiet

Die vorliegende Erfindung betrifft ein Verfahren und eine Einrichtung zum Ermitteln von Konturen innerhalb eines drucktechnisch zu reproduzierenden, farbigen Bildes, das nach optisch-elektrischer Abtastung digital gespeichert und mit Hilfe eines Monitors sichtbar gemacht wird.

### Zugrunde liegender Stand der Technik

Aus der DE-PS 2 137 676 ist bereits ein Verfahren bekannt, mit dem Bildkombinationen von digital gespeicherten Bildern vorgenommen werden können. Bei diesem Patent wird je nachdem, welches Bild bzw. welche Bildpartie eines Bildes aufgezeichnet werden soll, für die Aufzeichnung zwischen den entsprechenden gespeicherten Bildsignalen umgeschaltet. Das Umschalten erfolgt üblicherweise mittels einer die Kontur des gewünschten Bildbereichs wiedergebenden Maske, wobei die Maskenkontur das entsprechende Umschaltsignal liefert. Hierzu ist es erforderlich, die Maske von Hand zu zeichnen und optisch-elektrisch abzutasten, um das Umschaltsignal zu gewinnen. Dieser Vorgang ist zeitraubend und erfordert eine hohe manuelle Geschicklichkeit, weshalb es wünschenswert wäre, von der manuellen Herstellung und der zusätzlichen Abtastung dieser Maske wegzukommen. Es ist weiterhin aus Medical and Biological Engineering and Computing, September 1978, Seiten 542 bis 548, ein Computersystem für videodensitomerische Bildanalyse von P. Mancini, A. Benassi, G. Valli und L. Donato bekannt, bei dem für die medizinische Auswertung von Röntgenbildern die von einer Fernsehkamera abgetasteten Röntgenbilder in Form digitaler Videosignale mittels eines computergesteuerten Monitors sichtbar gemacht werden. Hierbei können die Konturen entweder durch subjektives Nacharbeiten mittels eines Lightpins, durch Nachziehen einer Phantomkontur durch den Bediener und Ähnlichkeitstransformationen oder durch näherungsweise Bestimmung der Konturen durch den Bediener und nachfolgende rechnergesteuerte Ermittlung für die Folgebilder unter Zugrundelegung der Kontur des vorangegangenen Bildes ermittelt werden. Die nachgezeichneten Konturen bzw. die Konturen des jeweils vorangegangenen Bildes werden in digitaler Form gespeichert und jeweils zur genauen Ermittlung der zu untersuchenden Kontur des folgenden Bildes mit Hilfe des steuernden Rechners als Vergleichsmaske verwendet. Die verschiedenen Konturen werden auf einem zusätzlichen Speicher oszilloskopisch sichtbar gemacht.

Ein ähnliches System ist in Philips Technish Tijdschrift 35, 179–189, 1975, Nr. 6, Machinaal meten aan röntgenopnamen, Seiten 179 bis 189, von W. Spiesberger und M. Tasto beschrieben worden, bei dem ebenfalls Konturen von Röntgenbildern in der Medizin mittels eines Lightpins auf einem Monitor nachgezeichnet werden. Die eigentliche Konturenauswertung erfolgt aber an einer Helligkeitsschwelle, so daß nur Bildpunkte als Kontur erkannt werden, die im Bereich dieser Helligkeitsschwelle liegen.

Diese Verfahren sind aber für die Zwecke der Drucktechnik nicht geeignet, da die exakte Kontur nicht getroffen wird, weil die Ungenauigkeit der Führung des Lightpins durch den Bediener direkt eingeht oder, wie bereits erwähnt, die Auswertung einer Helligkeitsschwelle nicht den Konturverlauf wiedergibt, der z. B. für das Ineinanderkopieren zweier Bilder gewünscht ist.

### Offenbarung der Erfindung

Der vorliegenden Erfindung liegt daher die Aufgabe zugrunde, ein Verfahren und eine Einrichtung anzugeben, wodurch es ermöglicht wird, auf einfache Weise eine genaue Ermittlung von Bildkonturen durchzuführen.

Die Erfindung erreicht dies durch die im kennzeichnenden Teil der Ansprüche 1 und 5 angegebenen Merkmale.

Vorteilhafte Weiterbildungen der Erfindung sind in den Unteransprüchen 2 bis 4 beschrieben.

Mit der Erfindung ist es infolge der so ermittelten Konturlinie möglich, einzelne Bildpartien, Personen oder Gegenstände freizustellen oder mit Hilfe der so ermittelten Kontur mit einem anderen Hintergrund zu umgeben, so z. B. durch Vorgabe eines bestimmten, konstanten Tonwertes für den Hintergrund.

### Kurze Beschreibung der Zeichnungen

Die Erfindung wird im folgenden anhand der Figuren 1 – 4 näher beschrieben. Es zeigt
Fig. 1 ein Blockschaltbild einer Einrichtung zur Durchführung des Verfahrens,
Fig. 2a ein Beispiel des Verlaufs einer Untersuchungszone,
Fig. 2b ein Beispiel für die Markierung der Kontur innerhalb der Untersuchungszone,
Fig. 3 ein Beispiel für eine Marke zur Erfassung der Untersuchungszone,
Fig. 4 ein Beispiel für die Füllung eines Tabellenspeichers der Fig. 1.

### Bester Weg zur Ausführung der Erfindung

Es wird bei der vorliegenden Erfindung davon ausgegangen, daß ein Bild in Form von vier Farbauszügen, Gelb, Magenta, Cyan und Schwarz, digital abgespeichert ist. Die Bilddaten werden mittels in Reproduktionstechnik bekannter Scanner durch optisch-elektrische Abtastung der Vorlagen und anschließender Analog-Digitalwandlung der bei der Abtastung gewonnenen Bildsignale ermittelt.

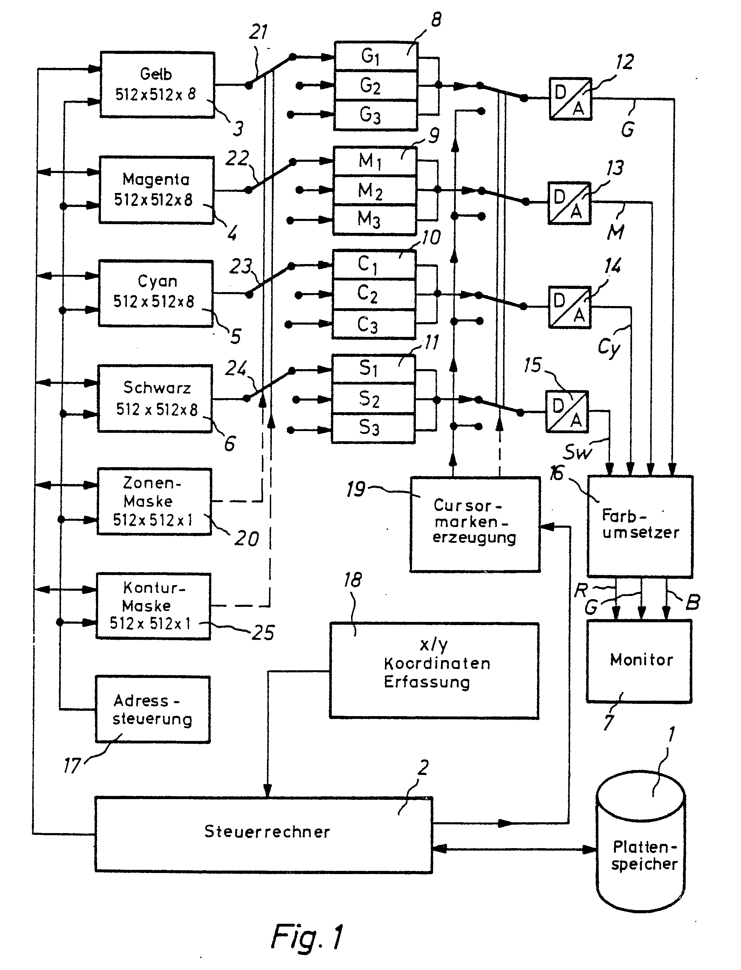

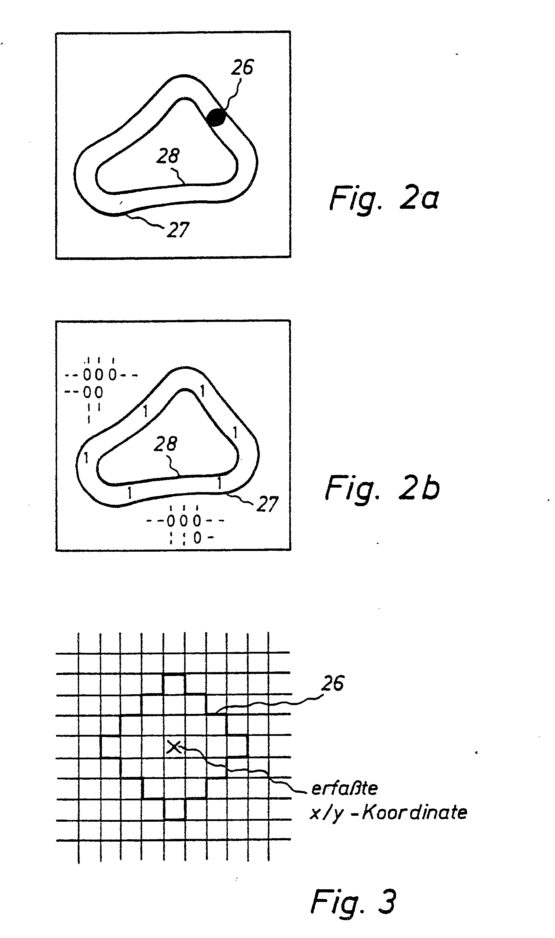

In Fig. 1 sind die digitalisierten Daten von vier Farbauszügen in einem Plattenspeicher 1 abgelegt, der mit einem Steuerrechner 2 verbunden ist. Die Bilddaten werden von dem Steuerrechner an Bildwiederholspeicher 3, 4, 5 und 6 weitergegeben, welche z. B. eine Kapazität von 512 × 512 Bildpunkten haben, wobei jeder Bildpunkt mit 8 bit abgespeichert ist. Aus diesen Bildwiederholspeichern werden die einzelnen Bildpunkte in bekannter Weise ständig in einer für die Darstellung des Bildes auf einem Farbmonitor 7 benötigten Reihenfolge und Frequenz ausgelesen. Die Bilddaten gelangen über zusätzliche Tabellenspeicher 8, 9, 10 und 11 auf Digital-Analogwandler 12, 13, 14 und 15, in denen die digitalisierten Bildsignale in analoge Bildsignale für die Ansteuerung des Monitors 7 umgewandelt werden. Da der Monitor bei der vorliegenden Patentanmeldung ein Bild zeigen soll, das dem Druckendprodukt, das durch Übereinanderdrucken mit den Farbauszügen Gelb, Magenta, Cyan und Schwarz entsteht, möglichst genau gleichen soll, ist zwischen den Digital-Analogwandlern und dem Monitor ein sogenannter Farbumsetzer 16 vorgesehen, mit dem die durch subtraktive Farbenmischung erhaltenen Farbauszüge Gelb, Magenta, Cyan und Schwarz in die für die Monitor-Darstellung erforderlichen additiven Farbsignale R, G, B umgewandelt werden. Solche Farbumsetzer sind ebenfalls bereits bekannt und z. B. in der DE-AS 2 607 623 beschrieben worden. Damit auf dem Monitor 7 das stehende Bild zustande kommt, werden die Bildwiederholspeicher 3, 4, 5 und 6, wie bereits erwähnt, zyklisch ausgelesen, und zwar gesteuert von einer an sich bekannten Bildwiederhol-Adressensteuerungseinrichtung 17. Um bei der vorliegenden Erfindung die eigentliche Kontur finden zu können, ist mit dem Steuerrechner 2 ein x, y-Koordinatenerfassungsgerät 18 verbunden, mit dessen Hilfe die zu ermittelnde Kontur grob auf dem Bild nachgefahren wird, z. B. die Umrandung einer Person oder eines Gegenstandes. Durch die hierbei ermittelten, die Kontur grob wiedergebenden x, y-Koordinaten wird ein Cursor auf dem Monitor mitgeführt, wodurch auf dem Monitor die durch den x, y-Koordinatenschreiber 18 vorgezeichnete Spur sichtbar gemacht wird. Während auf dem x, y-Koordinaten-Erfassungsgerät die gewünschte Kontur grob vorgezeichnet wird, wird ein entsprechender Bereich links und rechts der Kontur in einem Zonen-Maskenspeicher 20 von beispielsweise 512 × 512 × 1 bit Speicherkapazität mit binären Einsen gefüllt, während für die übrigen Bildpunkte in dem Zonen-Maskenspeicher 20 eine binäre Null enthalten ist. Die erfaßten Koordinaten sind der Mittelpunkt einer flächenhaften, z. B. annähernd kreisförmigen Cursormarke, die durch einen Cursormarkengeber, der mit der x, y-Koordinaten-Erfassungseinrichtung 18 verbunden ist, an entsprechender Stelle in das Monitorbild eingeblendet wird. Gleichzeitig mit der Bewegung der Cursormarke (26 in Fig. 2a) werden vom Steuerrechner 2 die von der Cursormarke bedeckten Bildpunkte durch Einschreiben einer binären Eins an den entsprechenden Stellen des Zonen-Maskenspeichers 20 markiert.

Die vorgezeichnete Konturbereichszone wird dem Bediener z. B. durch Aufhellen des Bildes an den entsprechenden Stellen sichtbar gemacht. Dies geschieht mit Hilfe der Tabellenspeicher 8, 9, 10 und 11. Jeder dieser Speicher besteht z. B. aus 256 Speicherzellen zu je 8 bit Wortlänge.

Die aus den Bildwiederholspeichern 3, 4, 5 und 6 ausgelesenen Daten werden als Adressen an diese Tabellenspeicher angelegt, und das jeweils aus der adressierten Tabellenspeicherzelle ausgelesene Wort über die DA-Wandler 12, 13, 14 und 15 dem Monitor 7 als Bildinformation zugeführt. Durch entsprechende Füllung der Tabellenspeicher mittels des Steuerrechners 2 kann somit das Bild mit beliebigen Gradationen und Farbkorrekturen auf dem Monitor dargestellt werden, ohne daß der Bildinhalt der Bildwiederholspeicher 3, 4, 5 und 6 verändert wird. Die Ausgänge der 4 Farbauszugswiederholspeicher sind über Schalter 21, 22, 23 und 24 entweder mit den Tabellenspeicherbereichen $G_1$, $M_1$, $C_1$, $S_1$ oder $G_2$, $M_2$, $C_2$, $S_2$ oder $G_3$, $M_3$, $C_3$, $S_3$ verbunden. Die Umschaltung erfolgt in Abhängigkeit vom ausgelesenen Inhalt des Zonen-Maskenspeichers 20 und eines noch zu erläuternden Konturen-Maskenspeichers 25. Wenn aus beiden Maskenspeichern eine binäre Null ausgelesen wird, sind die Ausgänge der Bildwiederholspeicher mit den Tabellenspeichern $G_1$, $M_1$, $C_1$, $S_1$, verbunden. Für Bildpunkte, bei denen der Zonen-Maskenspeicher 20 eine binäre Eins und der Konturen-Maskenspeicher 25 eine binäre Null enthält, sind die Tabellenspeicher $G_2$, $M_2$, $C_2$ und $S_2$ eingeschaltet, und für die Bildpunkte, bei denen der Konturen-Maskenspeicher 25 eine binäre Eins enthält, sind die Tabellenspeicher $G_3$, $M_3$, $C_3$, $S_3$ wirksam. Diese Umschaltregeln für die Tabellenspeicher sind noch einmal in der folgenden Tabelle zusammengestellt:

| Konturmaske | Zonenmaske | Eingeschalteter Tabellenspeicher |
|---|---|---|
| 0 | 0 | $G_1$, $M_1$, $C_1$, $S_1$ |
| 0 | 1 | $G_2$, $M_2$, $C_2$, $S_2$ |
| 1 | 0 | $G_3$, $M_3$, $C_3$, $S_3$ |
| 1 | 1 | |

Durch eine unterschiedliche Füllung der

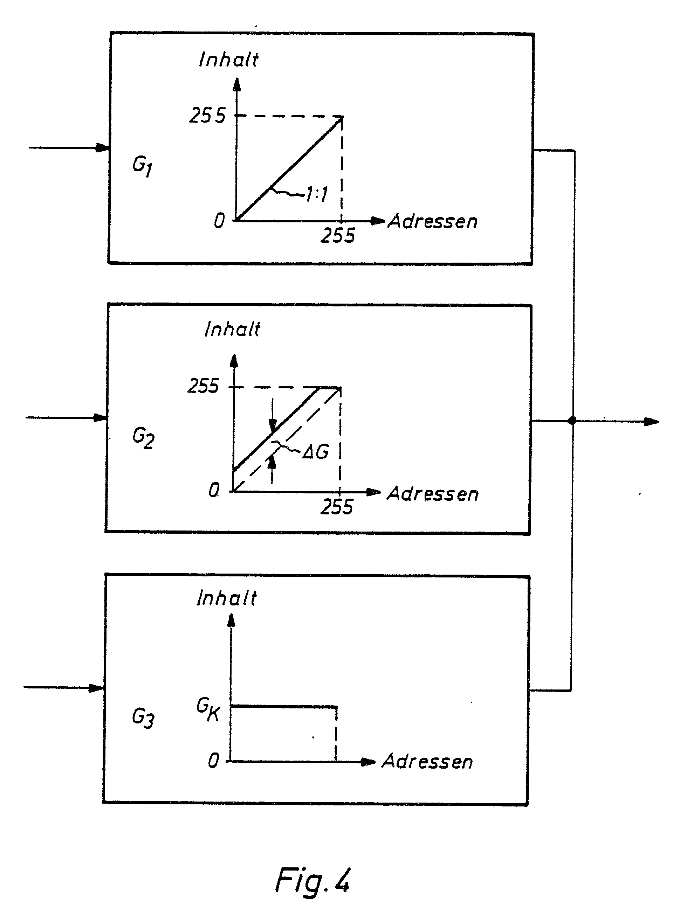

Tabellenspeicher können ganze Bildbereiche oder einzelne Bildpunkte, die im Zonen-Maskenspeicher und im Konturen-Maskenspeicher durch binäre Einsen gekennzeichnet sind, in verschiedener Weise auf dem Monitor-Bildschirm 7 dargestellt werden. Die Bildbereiche, in denen weder ein Zonen-Masken- noch ein Konturen-Maskenpunkt liegt, werden unverändert wiedergegeben, indem in den an diesen Stellen eingeschalteten Tabellenspeichern $G_1$, $M_1$, $C_1$, $S_1$ sich in jeder Speicherzelle ein Wert befindet, der gleich der Adresse dieser Speicherzelle ist (Fig. 4). Die Bildbereiche, die der Untersuchungszone entsprechen, werden auf dem Monitorschirm 7 aufgehellt wiedergegeben, indem in die an diesen Stellen eingeschalteten Tabellenspeicher $G_2$, $M_2$, $C_2$, $S_2$ um konstante Werte $\Delta G$, $\Delta M$, $\Delta C$, $\Delta S$ höhere Werte als in den Tabellenspeichern $G_1$, $M_1$, $C_1$, $S_1$ gefüllt werden (Fig. 4). Schließlich werden die in der Konturen-Maske gekennzeichneten Punkte auf dem Bildschirm in einer konstanten, wählbaren Farbe ($G_K$, $M_K$, $C_K$, $S_K$) wiedergegeben, indem in alle Speicherzellen der Tabellenspeicher $G_3$, $M_3$, $C_3$, $S_3$ jeweils die konstanten Werte $G_K$, $M_K$, $C_K$ und $S_K$ gefüllt werden. Diese Füllungen werden vor der Verarbeitung durch den Steuerrechner 2 in die Tabellenspeicher 8, 9, 10 und 11 eingeschrieben.

Die genaue Festlegung einer Kontur entlang einer Farbänderung im Bild erfolgt durch den Steuerrechner 2 nach einem an sich bekannten Algorithmus zur Konturenfindung. Solche Algorithmen sind bei der Auswertung von Luftbildaufnahmen bekannt, und zwar werden durch einen automatischen Suchlauf innerhalb des Bildes sämtliche Konturen ermittelt. Der automatische Suchlauf ist aber für die Zwecke der vorliegenden Erfindung nicht geeignet. Es wird bezüglich des Algorithmus auf die Literaturstelle »Computer, Graphics and Image Processing 1973, Seiten 66–80, Processing of Grey-Scale Pictures, von F. Holdermann & H. Kazmierczak« verwiesen. Weiterhin wird auf den Forschungsbericht aus der Wehrtechnik, BMVg FBWT 73 10, Erzeugung linienhafter Bildmuster aus Grautonbildern mit Hilfe der Kontrastgradienten, herausgegeben i. A. des Bundesministeriums für Verteidigung vom Dokumentationszentrum der Bundeswehr, Bonn, Dezember 1972, hingewiesen. Der rechnergesteuerte Ablauf der Konturenfindung durch Vergleich von Nachbarbildpunkten, d. h. des Kontrastgradienten, ist dort im einzelnen beschrieben, so daß hier auf eine ausführliche Wiederholung dieser Aufzählung verzichtet werden kann. Im Prinzip erfolgt die Festlegung der Kontur so, daß der Rechner den Inhalt des Zonen-Maskenspeichers 20 in seinen Arbeitsspeicher einliest, feststellt, welche Bildbereiche er auf eine Kontur hin untersuchen soll und dann aus den Bildwiederholspeichern die betreffenden Farbwerte in einer durch den gewählten Algorithmus festgelegten Reihenfolge ausliest und bestimmt, welche Koordinatenpunkte auf der Grenze des untersuchten Farbkontrastes liegen. Die gefundenen Konturpunkte werden dann vom Steuerrechner 2 als binäre Einsen in den Konturen-Maskenspeicher 25 geschrieben und erscheinen dadurch auf dem Bildschirm des Monitors 7 in der gewählten Farbe ($G_K$, $M_K$, $C_K$, $S_K$), so daß der Bediener das Resultat sieht und gegebenenfalls eingreifen kann, wenn die Kontur nicht in der gewünschten Weise verläuft. In einem solchen Fall kann der Bediener den Ablauf für die automatische Konturenfindung unterbrechen und mit dem x-y-Koordinatenerfassungsgerät 18 über den Steuerrechner 2 Konturpunkte im Kontur-Maskenspeicher 25 löschen oder direkt manuell hineinschreiben. Der Vorteil der vorliegenden Erfindung gegenüber dem bei der Luftbildausweitung bekannten Verfahren besteht darin, daß durch die Vorgabe der Untersuchungszone und gleichzeitiger Monitorkontrolle Fehler an Kreuzungspunkten vermieden werden und exakt nur die Kontur ermittelt wird, die für eine Bildmontage maßgebend ist und von einer automatisch ermittelten Kontur abweicht.

Fig. 2a zeigt ein Beispiel, wie eine solche Konturenuntersuchungszone auf dem Bildschirm des Monitors 7 nachgefahren wird. Es ist eine Cursormarke 26 gezeigt, die innerhalb des vermuteten Konturenbereichs, der durch die Linien 27 und 28 umrandet ist, bewegt wird.

Fig. 2b zeigt die Zonen-Maske, durch die die Untersuchungszone durch das Vorzeichen, d. h. durch die Linien 27 und 28 bestimmt ist. Die Zonen-Maske wird markiert durch binäre Nullen und Einsen, wobei die Eins dort gesetzt ist, wo die Untersuchungszone verläuft.

Fig. 3 zeigt ein Beispiel für die Cursormarke 26, wobei der zentrale Punkt des Cursors 26 jeweils die erfaßte x-y-Koordinate darstellt. Es ist leicht einzusehen, daß die Breite der Cursormarke 26 je nach Aufgabenstellung variiert, d. h. die Breite der zu untersuchenden Zone eingestellt werden kann.

Fig. 4 zeigt ein Beispiel für die Füllung eines Tabellenspeichers, wobei hier die Füllung des Tabellenspeichers 11 für den Gelbauszug dargestellt ist. Die Adressen laufen von 0 bis 255, und es sind 256 Funktionswerte, d. h. 1 Funktionswert pro Adresse, vorgesehen.

Unter $G_1$ ist eine lineare Funktion eingegeben, wodurch die Ausgangswerte des Speichers gleich den Eingangswerten sind, d. h. es findet eine Transformation 1 : 1 statt. In dem mittleren Speicherbereich $G_2$ ist der Funktionswert um einen Betrag $\Delta G$ erhöht, d. h. die von dem Tabellenspeicher ausgegebenen Werte sind um den Betrag $\Delta G$ größer als die Eingangswerte. Der Speicherbereich, der durch $G_3$ gekennzeichnet ist, enthält einen konstanten Wert $G_K$. Für sämtliche Eingangswerte dieses Speichers wird dieser Wert ausgegeben. Dies kann z. B. ein konstanter Tonwert sein, um die Kontur zu kennzeichnen. In dem Beispiel $G_2$ handelt es sich um eine konstante Aufhellung des Bildes in der Konturzone um den Betrag $\Delta G$.

## Patentansprüche

1. Verfahren zum Ermitteln von Konturen innerhalb eines drucktechnisch zu reproduzierenden farbigen Bildes, das nach optisch-elektrischer Abtastung digital in einem Bildspeicher gespeichert ist und mit Hilfe eines Monitors sichtbar gemacht wird, dadurch gekennzeichnet,

a) daß eine mit dem Monitor verbundene Einrichtung zur X-Y-Koordinatenerfassung vorgesehen ist, mit deren Hilfe der zu untersuchende Konturenbereich innerhalb des Bildes gekennzeichnet wird, wobei eine Untersuchungszone vorgegebener Breite festgelegt wird,

b) daß die X-Y-Koordinaten der innerhalb der Untersuchungszone liegenden Bildpunkte aus dem gespeicherten Bild ermittelt werden,

c) daß die zu diesen Koordinaten gehörenden Bildpunkte anhand der den Koordinaten entsprechenden Adressen aus dem Bildspeicher abgerufen und tonwertmäßig miteinander verglichen werden und

d) daß aus den Tonwertunterschieden der einzelnen Bildpunkte der exakte Verlauf der Kontur innerhalb der Untersuchungszone ermittelt wird.

2. Verfahren nach Anspruch 1, dadurch gekennzeichnet, daß zur Koordinatenerfassung ein X-Y-Digitizer verwendet wird.

3. Verfahren nach Anspruch 1, dadurch gekennzeichnet, daß zur Koordinatenerfassung der Kontur ein auf dem Monitor verschiebbarer Cursor verwendet wird.

4. Verfahren nach einem der Ansprüche 1 bis 3, dadurch gekennzeichnet, daß die ermittelte Konturlinie auf dem Monitorbildschirm sichtbar gemacht wird.

5. Einrichtung zur Durchführung des Verfahrens für farbige drucktechnische Reproduktion von Bildern mit Digitalspeichern für die einzelnen Farben zur Aufnahme der durch optisch-elektrische Abtastung gewonnenen digitalen Bildsignale, den Digitalspeichern jeweils nachgeschalteten Bildwiederholungsspeichern und einem an die Bildwiederholungsspeicher angeschlossenen Farbmonitor, dadurch gekennzeichnet, daß

a) eine Koordinatenerfassungseinrichtung (18) zum groben Vorgeben einer Untersuchungszone innerhalb derer die Kontur liegt,

b) Speichermittel (20, 25) zur zeitweiligen Aufnahme der digitalen Bildsignale des innerhalb der Untersuchungszone liegenden Bildbereiches,

c) eine Recheneinrichtung (2) zur Ermittlung der exakten Kontur aus den digitalen Bildsignalen des zwischengespeicherten Bildbereichs sowie

d) dem Monitor (7) in den einzelnen Farbkanälen vorgeschaltete Tabellenspeicher (8, 9, 10, 11) zur bildmäßigen Markierung der Kontur auf dem Monitor vorgesehen sind.

## Claims

1. A method for determining contours within a colour image which is to be reproduced by printing technology means, which after opto-electric scanning is stored digitally within an image memory and is made visbly by means of a monitor, characterised in that

a) an X-Y co-ordinate detector system coupled to the monitor is incorporated by means of which the contour range within the image which is to be examined is characterised, an examination space of predetermined width being established,

b) that the X-Y co-ordinates of the image dots situated within the examination space are determined from the stored image,

c) that the image dots appertaining to these co-ordinates are called up from the image memory by the addresses corresponding to the co-ordinates and are compared to each other in respect of tonal value, and

d) that the precise path of the contour within the examination space is determined from the tonal value differences of the individual image dots.

2. A method according to claim 1, characterised in that an X-Y digitiser is utilised to detect the co-ordinates.

3. A method according to claim 1, characterised in that a cursor displaceable on the monitor is utilised to establish the contour co-ordinates.

4. A method according to one of the claims 1 to 3, characterised in that the contour line determined is rendered visible on the monitor image screen.

5. A system for application of the method for reproduction by colour printing technology of images, comprising digital memories for the individual colours for reception of the digital image signals obtained by opto-electric scanning, image repeater memories post-connected to the digital memories in each case, and a colour monitor connected to the image repeater memories, characterised in that

a) a co-ordinate detection system (18) is provided for coarse presetting of an examination space within which the contour is situated,

b) storage means (20, 25) are provided for temporary reception of the digital image signals of the image area situated within the examination space,

c) a computer system (2) is provided for determining the precise contour from the digital image signals of the intermediately stored image area, and

d) tabular memories (8, 9, 10, 11) preconnected to the monitor (7) in the individual colour channels are provided for marking the contour on the monitor in correspondence with the image.

## Revendications

1. Procédé pour déterminer des contours à l'intérieur d'une image colorée destinée à être reproduite par une technique d'impression, et qui, après balayage optique et électrique, est mémorisée numériquement dans une mémoire d'image puis rendue visible à l'aide d'un moniteur (ou récepteur de controle), procédé caractérisé en ce que:

a) il est prévu une installation reliée au moniteur, pour la détection des coordonnées X-Y, à l'aide de laquelle la zone des contours à explorer à l'intérieur de l'image est caractérisée, une zone d'exploration d'une largeur prédéterminé étant alors établie,

b) les coordonnées X-Y des points d'images situés à l'intérieur de la zone d'exploration sont déterminées à partir de l'image mémorisée,

c) les points d'images afférents à ces coordonnées sont extraits de la mémoire d'image en se référant aux adresses correspondantes aux coordonnées et sont comparés entre eux en valeurs tonal,

d) à partir des différences de valeurs tonal des points d'images individuels, le tracé exact du contour à l'intérieur de la zone d'exploration, est déterminé.

2. Procédé selon la revendication 1, caractérisé en ce que, pour la détection des coordonnées, on utilise un indicateur X-Y numérique.

3. Procédé selon la revendication 1, caractérisé en ce que pour la détection des coordonnées du contour, on utilise un curseur susceptible de se déplacer sur le moniteur.

4. Procédé selon l'une quelconque des revendications 1 à 3, caractérisé en ce que la ligne de contour ainsi déterminée est rendue visible sur l'écran du moniteur.

5. Installation pour la mise en oeuvre du procédé pour la reproduction d'images en couleurs par une technique d'impression, avec des mémoires numériques pour les différentes couleurs permettant de recevoir les signaux numériques d'images obtenus par balayage optique et électrique, avec des mémoires de répétition d'images respectivement branchées à la suite des mémoires numériques, et avec un moniteur de couleur raccordé aux mémoires de répétition d'images, installation caractérisée en ce qu'elle comporte:

a) une installation de détection de coordonnés (18) pour donner au préalable, de facon approchée, une zone d'exploration à l'intérieur de laquelle se situe le contour,

b) des moyens de mémorisation (20, 25) pour recevoir de facon temporaire les signaux numériques d'images de la zone d'image se situant à l'intérieur de la zone d'exploration,

c) une installation de calcul (2) pour déterminer le contour exact à partir des signaux numériques d'images de la zone d'image mémorisée temporairement,

d) une mémoire à tableaux (8, 9, 10, 11) branchée en avant du moniteur (7) dans les différentes canaux de couleurs pour le repérage, en fonction de l'image, du contour sur le moniteur.

Fig. 1

Fig. 2a

Fig. 2b

erfaßte
x/y - Koordinate

Fig. 3

9

Fig. 4